# EUROPEAN PATENT APPLICATION

(11) **EP 4 148 372 A1**
(43) Date of publication of application: **15.03.2023**
(21) Application number: 21195847.5
(22) Date of filing: 09.09.2021
(51) Int. Cl.: G01B 5/012, G01B 7/016

(54) **MEASUREMENT PROBE**

(71) Applicant: Renishaw PLC, Wotton-under-Edge, Gloucestershire GL12 8JR (GB)
(72) Inventor: The designation of the inventor has not yet been filed
(74) Representative: Dunn, Paul Edward

(57) **Abstract**

A measurement probe for a coordinate positioning apparatus, such as a coordinate measuring machine (CMM) or a machine tool, is described that comprises a probe body connected to a stylus holder (102) by a strain-sensing structure (100). The strain-sensing structure has an inner portion (202) connected to an outer portion (200) by a plurality of bendable members (204). A proximal end (220) of each bendable member (204) is attached to the inner portion (202) and a distal end (222) of each bendable member (204) being attached to the outer portion (200). The inner and outer portions (200,202) are centred on a central axis and the plurality of bendable members (204) comprise at least one strain-sensing element (210). The proximal and distal ends (220,222) of each bendable member (204) are located at different angles about the central axis. Such an arrangement enables both scanning and touch trigger measurements to be acquired.

## Description

The present invention relates to a measurement probe for a coordinate positioning apparatus, such as a machine tool, comprising one or more strain-sensing elements for sensing deflection of an object-contacting stylus.

A variety of measurement probes for use on machine tools or other coordinate positioning apparatus are known. These include touch trigger probes that issue a trigger signal when a stylus is deflected due to contact with an object and so-called scanning probes that output a stream of data describing the amount of stylus deflection that occurs as a stylus is scanned along a surface. The output from such measurement probes can be used, in combination with information from the machine tool that describes the position of the measurement probe relative to the object, to measure the position of points on the surface of the object. These measurements may be used for part setup or inspection purposes.

A touch trigger probe may include a simple electrical circuit that is broken when the stylus is deflected, thereby generating a trigger signal that is passed to the machine tool. It is also known to use a strain sensor to measure when the stylus has been deflected due to contact with an object. For example, WO2006/100508 and WO2006/120403 describe touch trigger probes having a strain-sensing structure that connects a stylus holder to the probe body. The strain-sensing structure includes three radial spokes on which strain-sensing elements are mounted. The signals from the strain-sensing elements are combined and a trigger signal is issued by the touch trigger probe when the combined signal exceeds a certain threshold. This arrangement provides a robust, accurate and reliable touch trigger probe.

WO2002/061378 describes a scanning probe that is suitable for use with a machine tool. The scanning probe includes a capacitive transducer combined with a spring arrangement that maintains a suspended stylus holder in a rest position in the absence of an applied external force. The capacitive transducer is used to measure (in three-dimensions) any deflection of a stylus attached to the stylus holder away from the rest position and a stream of three-dimensional deflection data is output by the scanning probe whilst the stylus tip is moved (i.e. scanned) along the surface of an object being measured. Such a scanning probe allows a large number of surface position measurements to be acquired relatively rapidly, compared with a touch trigger probe. However, the complex and relatively costly spring and transducer arrangement typically limits the use of such scanning probes to higher end measurement applications.

According to the present invention, there is provided measurement probe for a coordinate positioning apparatus, comprising; a probe body, a stylus holder, and a strain-sensing structure connecting the stylus holder to the probe body, the strain-sensing structure having an inner portion connected to an outer portion by a plurality of bendable members, a proximal end of each bendable member being attached to the inner portion and a distal end of each bendable member being attached to the outer portion, the inner and outer portions being centred on a central axis and the plurality of bendable members comprising at least one strain-sensing element, characterised in that the proximal and distal ends of each bendable member are located at different angles about the central axis.

The present invention thus relates to a measurement probe, for example a touch trigger or scanning probe, that is configured for use with a coordinate positioning apparatus. In a preferred example, the measurement probe is configured to be used with a machine tool. The measurement probe comprises a probe body or housing. The probe body is the part of the measurement probe that is secured to the coordinate positioning apparatus. For example, the probe body may be bolted to a shank that can be held in the spindle or quill of a machine tool. A stylus holder is also provided that can be deflected relative to the probe body. The stylus holder may incorporate a stylus or it may include a connector (e.g. a screw-threaded aperture) to which a stylus can be secured. A stylus may comprise an elongate rod with a ball mounted at its distal end. The stylus holder may thus define a central axis along which the longitudinal shaft of an attached stylus projects.

The stylus holder is deflectably connected to the probe body via the strain-sensing structure. The strain-sensing structure comprises an inner portion that has the same central axis as the outer portion. In other words, the inner and outer portions are concentric or centred on a common (central) axis. In a preferred embodiment, the inner portion may comprise a circular hub and the outer portion may comprise a (circular) ring having a larger diameter than the circular hub. The central axis about which the inner and outer portions are centred may also coincide with the elongate axis defined by the stylus holder. The inner and outer portions are connected by a plurality of bendable members (e.g. bendable arms). In particular, a proximal end of each bendable member is attached to the inner portion and a distal end of each bendable member is attached to the outer portion. As explained below, the inner and outer portions may be relatively stiff. The one or more bendable members conveniently provide the only connection between the inner and outer portions. As will be explained below, the plurality of bendable members will bend when the stylus holder is moved relative to the probe housing (i.e. as the inner and outer portions are moved relative to each other). At least one strain-sensing element is provided to measure the bending of the bendable members. In a preferred embodiment, each bendable member includes at least one strain-sensing element to allow bending of each such bendable member to be measured.

The measurement probe is characterised by the proximal and distal ends of each bendable member being located at different angles about the central axis. In other words, the proximal end of each bendable member is angularly offset (i.e. has a different angle about the central axis) from its distal end. The bendable members do not therefore extend purely in a radial direction (i.e. with no change in angle about the central axis) but also extend circumferentially about the central axis of the strain-sensing structure (i.e. the angle about the central axis of each bendable member varies along its length). In a preferred embodiment, each bendable member may be curved such that it extends angularly from the inner portion to the outer portion. There may, of course, also be a radial offset between the ends of each bendable member (i.e. the bendable members may extend both angularly about the central axis of the strain-sensing structure and radially).

An advantage of the present invention over WO2006/100508 and the like arises from the configuration of the bendable members. In particular, the length of each bendable member can be greater than the radial separation between the inner and outer portions. This allows the length of the bendable members to be increased for a given outer dimension or diameter of the strain-sensing structure. The provision of a longer bendable member allows greater bending for a given stiffness and resilience of material. This, in turn, increases the measurable working range of deflection of the stylus holder relative to the probe body. More particularly, this enables the measurement probe of the present invention to also be used as a scanning probe as opposed to the arrangement of WO2006/100508 that is usable only as a touch trigger probe. The present invention thus combines the robustness, compactness and cost advantages of using strain-sensing elements (e.g. strain gauges) with the advantages of taking scanning rather than touch trigger measurements. As mentioned below, it would also be possible to use the measurement probe for taking touch trigger measurements.

Preferably, the strain-sensing structure is substantially disk-shaped. In other words, it may be a generally flat or planar structure that is substantially circular. In such an example, the central axis may coincide with the centre point of the disk and this central axis may extend perpendicularly to the plane of the disk. Although a disk shape is preferred, it would be possible to use other shapes of surface-sensing structure.

The inner portion preferably comprises a circular central hub. This circular central hub is preferably rigid and may be formed from single piece. The central hub may be attached to one of either the probe body or the stylus holder. The outer portion may conveniently comprise an outer (circular) ring. The outer ring is preferably rigid and formed as a single, continuous piece. The outer ring may be attached to the other of the stylus holder or the probe body. Preferably, each of the plurality of bendable members are curved. The curvature of the bendable members is preferably in the plane of the disk. This curvature may be in a plane perpendicular to the plane in which the bendable members are configured to bend in use. For example, the bendable members may lie flat in a plane with curved inner/outer edges and may be bendable out of that plane. The use of curved bendable members allows longer bendable members to be provided than would be possible if they were to extend radially.

In a preferred embodiment, the plurality of bendable members comprises three bendable members. The three bendable members are conveniently equidistantly spaced apart from one another (i.e. around the central axis). Placing strain-sensing elements on each of the three bendable members allows a direction of stylus holder deflection to be measured using the strain sensed in each of the bendable members.

The strain-sensing structure may be assembled from a plurality of components. Advantageously, the strain-sensing structure comprises a single (unitary) part. In a preferred embodiment, the strain-sensing structure is formed as a single, machined part. In other words, a blank substrate (e.g. a blank disk of stainless steel) may be machined (e.g. using an EDM process) to form the inner and outer portions with the bendable members connecting those portions. Providing such a unitary strain-sensing structure reduces any hysteresis effects that might otherwise arise due to slippage between components that are attached or clamped to one another. This allows the stylus holder to adopt a highly repeatable rest or neutral position relative to the probe body, as explained below.

Advantageously, the strain-sensing structure is formed from a resilient material. A variety of different materials could be used, depending on the range of deflection that is to be measured. For example, a low stiffness and therefore a low Youngs Modulus value material (e.g. Aluminium) could be used for high deflection range applications. Alternatively, a high stiffness and hence high Youngs Modulus value material (e.g. a ceramic) could be used for high sensitivity (lower deflection range) applications.

The strain-sensing structure may be formed from a metal. Conveniently, the strain-sensing structure is formed from a Martensitic stainless steel (e.g. grade 416, 420, 440, 440C or X15TN stainless steel). Alternatively, a carbon (bearing) steel, such as EN31, could be used. Aluminium (e.g. 6000 series Aluminium) would be another option. The strain-sensing structure may also be formed from a ceramic or from a polymer. The various different materials mentioned above would be suitable for different applications having different material property requirements, such as endurance limits and Youngs Modulus. The polymers could be machined or moulded. The ceramics could be sintered moulded parts.

The strain-sensing elements may be bonded to the bendable members (e.g. using an adhesive). A diamond-like carbon (DLC) coating may be applied to the bendable member (e.g. if the bendable members are made from an electrically conductive material). This provides a layer of electrical insulation to prevent the strain-sensing element being shorted by an electrically conductive substrate. If the strain-sensing structure is formed of Aluminium, an anodising process could be used as an alternative to a DLC coating. Ceramics and polymers would not require such an isolating layer.

The thickness of the strain-sensing structure may be configured to give the different parts of that structure the desired levels of flexibility. For example, certain parts of the strain-sensing structure may be thinned to increase flexibility. In a preferred embodiment, the inner and outer portions may be relatively thick and hence relatively rigid. In contrast, each of the plurality of bendable members may be relatively thin (i.e. thinner than the inner/outer portions) to provide increased flexibility. Any motion of the inner portion relative to the outer portion will then result in bending of the (transduced) bendable members with minimal bending of the (non-transduced) inner and outer portions. In this manner, motion between the stylus holder and the probe body will cause bending in the bendable members which can be measured using the strain-sensing elements.

As mentioned above, the strain-sensing structure may be substantially planar. The strain-sensing structure may also be formed from a resilient material. In a preferred embodiment, the plurality of moveable members may be bendable (i.e. elastically deformable) in a direction perpendicular to the plane of the strain-sensing structure. In other words, the bendable members may bend out of the plane of the strain sensing structure when the stylus holder is deflected relative to the probe body. On removal of an applied external force, the resilience of the strain-sensing structure may mean it acts like a spring and returns to the rest state. The strain-sensing structure may be the only connection between the probe body and the stylus holder. Alternatively, there may be other springs or mechanisms that also support the stylus holder relative to the probe body.

As well as the thickness of each bendable member, the lateral extent or (in-plane) width of such bendable members may also be configured so as to optimise bending. In this regard, we note that the "width" of each bendable member is transverse to its length (with the length being defined in the direction from the proximal to distal end of each bendable member). In a preferred example, the outermost and innermost edges of the bendable members may be curved. The curvature of the innermost and outermost edges may each be circular arcs centred about different points. The curvature of the innermost and outermost edges may be centred about points that do not coincide with the central axis of the strain-sensing structure. This has been found to help reduce twisting of the bendable members when they are bent by movement of the inner portion relative to the outer portion (e.g. due to stylus deflection). This also helps concentrate strain in certain sections of each bendable member, allowing strain-sensing elements to be located at optimum locations to measure the bending effect.

Advantageously, at least one strain-sensing element is located on each bendable member. A single strain-sensing element may be provided on each bendable member. More than one strain-sensing element may be provided on each bendable member. For example, each bendable member may comprise a pair of strain-sensing elements. If a pair of strain-sensing elements are used, they may be located on opposed surfaces (e.g. upper and lower surfaces) of the bendable member; this allows differential strain measurements to be taken which can help reduce or remove certain temperature effects. The strain-sensing elements provided on each bendable member may be similar to one another. Alternatively, the strain-sensing elements provided on each bendable member may be dissimilar. For example, a bendable member may carry p-type and n-type semiconductor strain-sensing elements on its upper and lower surfaces respectively to compensate for resistive temperature effects. It would also be possible for only some of the plurality of bendable members to include a strain-sensing element.

Analysis of the strain properties of the bendable member may be performed to optimise placement of the strain sensing elements. For example, a strain map of the bendable member design may be used to optimise the placement of the strain-sensing elements. In this manner, the location of the strain-sensing element can be optimised to get a measurable change in strain over a given stylus deflection range. Advantageously, each strain-sensing element may be affixed to a region of a bendable member where the change in strain is proportional (e.g. by a linear relationship) to the bending of the bendable member.

Advantageously, the strain-sensing elements are affixed to regions of each bendable member where variations in the strain that is exhibited when the stylus holder is in the rest (undeflected) position are low. Each strain-sensing element may be located where the strain gradient is low along the axis of the element for a given stylus deflection (thereby reducing effects due to slight variations in the location of the strain-sensing element). The location of each strain-sensing element may be at or near the midpoint of the bendable member and/or aligned with the local elongate axis of the bendable member. This can avoid edge effects or stress concentrations. Advantageously, the strain-sensing elements are affixed at or near the end of the bendable member that is attached to the probe body. For example, if the inner portion is attached to the probe body each strain-sensing element may be attached at, or in the proximity of, the proximal end of each bendable member. In this manner, the change in strain that occurs during stylus deflection is maximised.

It would, of course, also be possible to desensitize the structure by appropriate positioning of the strain-sensing elements. For example, the strain-sensing elements may be moved away from the ends of the bendable members that are fixed to the probe body to reduce the level of strain to which they are being subjected. Similarly, the strain-sensing elements could be rotated (e.g. away from the elongate axis of the bendable member) to adjust their sensitivity to stylus deflections. This alteration in the position and/or orientation of the strain-sensing elements may, for example, be used to allow the same straining sensing disk to be used for measurements over different ranges of stylus deflection.

The measurement probe may include at least one temperature sensor. The at least one temperature sensor may be used to compensate any measurements taken using the strain-sensing elements for changes in temperature. The at least one temperature sensor may be mounted to the strain-sensing structure. For example, one or more temperature sensors may be mounted to the inner portion and/or the outer portion. Advantageously, the temperature sensor(s) may be mounted to the strain-sensing structure in the vicinity of the strain-sensing elements. For example, a temperature sensor may be attached to one or more of the bendable members. Attaching the temperature sensor to the bendable member in the vicinity of the strain-sensing element is preferred. The temperature sensor may comprise a thermocouple or thermistor. Alternatively, one or more additional strain-sensing elements (i.e. that are not used for measuring bending) may be used to measure temperature to allow temperature compensation.

As mentioned above, the stylus holder may incorporate an integrated stylus or the stylus holder may carry a releasably attachable stylus. The strain-sensing structure may include an aperture (through hole) that the stylus holder or stylus can pass through. The aperture may be circular. The aperture may be located on the central axis. The stylus holder may hold a stylus such that the stylus axis (i.e. the elongate axis of the stylus) lies on the central axis. As will be described below, this arrangement is convenient as it allows a protection mechanism to be incorporated in to the measurement device to protect the strain-sensing structure from over-deflection of the stylus.

As explained above, the strain-sensing structure connects the stylus holder to the probe body. This means that any deflection of the stylus holder relative to the probe body imparts a bending force on the strain-sensing structure. Preferably, any bending occurs predominantly in the bendable members of the strain-sensing structure. The outer portion may be secured to the probe housing and the stylus holder may be connected to the inner portion. In a preferred embodiment, the inner portion is secured to probe housing and the stylus holder is connected to the outer portion. This is advantageous because the stylus holder can then include a plurality of arms that extend radially from the central axis to where they engage the outer portion. This can magnify the effect of any force that is applied to the stylus (i.e. by the lever effect). As mentioned above, the strain-sensing structure may also act as a spring to return the stylus holder to a rest position in the absence of an applied external force.

The measurement probe preferably adopts a rest position (which can also be termed a neutral position or an undeflected position) when no external force is applied to the stylus holder. It is preferable for the stylus holder to return to substantially the same rest position after it has been deflected. The strain-sensing structure may thus act as the return spring that returns the stylus holder to the rest position. The present inventors have found that, in the embodiment described below, the same rest position can be attained to within 1µm for a 100mm stylus. This high level of mechanical repeatability enables accurate touch trigger and scanning measurements. The provision of such a mechanically defined rest position is advantageous because it reduces any transducer drift effects that might occur with a freely suspended stylus holder structure. For example, auto-zeroing the outputs of the strain-sensing elements when the stylus holder is in the mechanically defined rest position can ensure all acquired measurements are tied to the same (mechanically defined) rest position. The effects of short-term or long-term transducer drift can thus be mitigated.

A break-out or protection mechanism may be provided to protect the strain-sensing structure from damage due to stylus over-deflection (i.e. stylus deflection greater than the operable deflection range). In other words, the stylus holder may be connected to the strain-sensing structure by a protection mechanism. The protection mechanism may comprise a spring (e.g. a coil or compression spring) to bias the stylus holder into contact with the strain sensing structure in the absence of an externally applied force. The stylus holder and strain-sensing structure may comprise mutually engageable elements that repeatably locate the stylus holder relative to the strain-sensing structure. For example, a kinematic arrangement may be provided (e.g. with balls provided on the strain-sensing structure and grooves on the stylus holder). The same position of the stylus holder relative to the strain-sensing structure (e.g. to within 1µm for a 100mm stylus) will then be adopted each time the stylus holder is brought into engagement with the strain-sensing structure.

The protection mechanism also allows the stylus holder to disengage the strain-sensing structure when the external force applied to the stylus holder exceeds a threshold level. In other words, if too high a force is applied the stylus holder will lift from the strain-sensing structure and will not impart a force to that structure which is large enough to cause damage. The stylus holder re-engaging the strain-sensing structure does not then require recalibration because the stylus holder will return to the same rest position it was located in previously. This provides kinematic break-out (crash) protection.

The protection mechanism may include a spring to bias the stylus holder into contact with the strain sensing structure. In a preferred embodiment, the spring force is reacted back to the strain sensing structure. For example, forces applied to stylus holder may be passed to the outer portion and the spring force may also be reacted back to the outer portion. This ensures a consistent residual force (e.g. a kinematic holding force) is applied to the strain-sensing structure. Measurement performance is thus improved.

During motion of the measurement device, it is possible for there to be oscillatory motion between the inner and outer portions. The measurement probe may thus comprise at least one fluid damper for damping oscillations of the strain sensing structure. The at least one fluid damper may include a magnet and a ferrofluid (i.e. a magnet fluid). The magnet may retain the ferrofluid in the desired location. At least one seal and/or a void for capturing the ferrofluid may also be provided to prevent loss of the ferrofluid if the measurement probe is subjected to high speed rotations (e.g. when it is spun in a machine tool spindle).

As outlined above, the measurement probe of the present invention may be used as a scanning probe. There may thus be provided a scanning unit (e.g. located within the probe body) configured to receive signals from the at least one strain-sensing element and to generate scanning data for output to a remote probe interface. The scanning unit may comprise a processor. The scanning data may provide a measure of the magnitude of stylus deflection. The scanning data may provide a measure of the direction of stylus deflection. A two-dimensional measurement of stylus deflection direction may be provided. A three-dimensional measurement of stylus deflection direction is preferably provided. The sensitivity and/or deflection range in the x and y directions may be different to the sensitivity along the z-direction; the z-direction being the direction that coincides with the elongate shaft of the stylus. Preferably, both the magnitude and direction of stylus deflection are generated and output. For example, stylus deflection measured in three Cartesian coordinates (x,y,z) may be output. The output may be via a wireless (e.g. RF/Optical) link or a wired link. The measurement probe may be battery powered.

The measurement probe of the present invention may be used as a touch trigger probe. This may be instead of, or as well as, a scanning probe. The probe may thus comprise a touch trigger unit (e.g. located within the probe body) configured to receive signals from the at least one strain-sensing element. The touch trigger unit may comprise a processor. The touch trigger unit may compare the received signals to a stylus deflection threshold and generate a trigger signal for output to a remote probe interface when the stylus deflection threshold is crossed. The scanning and touch trigger units may be implemented as a single unit (e.g. operable in touch trigger and/or scanning mode).

The measurement probe may be mounted in the spindle of a machine tool (e.g. in place of the tool used to cut workpieces). The machine tool spindle may be configured to move the measurement probe about within the machine tool to measure points on the surface of an object, such as workpiece. Alternatively, the measurement probe may be mountable to another part of the machine tool. For example, it may be mounted on the machine tool bed, on a tool-setting arm, or on a grinding wheel head etc. The measurement probe may be used to measure any object. For example, the measurement probe may be arranged to measure a workpiece (including a workpiece blank) that has been, or will be, processed (e.g. cut) by the machine tool. The measurement probe may also be used to measure a tool that is to be used by the machine tool (i.e. it may be used for on-machine tool inspection or setting).

The measurement probe may be arranged to carry any suitable stylus. For example, the measurement probe may comprise a standard stylus having an elongate shaft and a ball mounted to its distal end. In this manner, form measurements may be collected. The measurement probe may also be arranged to carry a surface finish stylus. The surface finish stylus may be unskidded. In this manner, surface finish (e.g. surface roughness, waviness etc) measurements may be collected. Any attached stylus may be cranked or angled to achieve the desired access to part features.

A measurement probe may also be provided with an associated interface for receiving measurement data (e.g. scanning and/or touch trigger data) from the measurement probe. The interface may be a part of the machine tool controller or it may comprise a separate unit that is connected to the machine tool controller.

Also described herein is a strain-sensing structure for connecting a stylus holder to a probe body, the strain-sensing structure having an inner portion connected to an outer portion by a plurality of bendable members, a proximal end of each bendable member being attached to the inner portion and a distal end of each bendable member being attached to the outer portion, the inner and outer portions being centred on a central axis and the plurality of bendable members comprising at least one strain-sensing element, wherein the proximal and distal ends of each bendable member are located at different angles about the central axis. Such a strain-sensing structure may be incorporated in a measurement probe. Any of the above-described features of the invention may also be included.

Also described herein is a strain-sensing structure for connecting a stylus holder to a probe body, the strain-sensing structure having an inner portion connected to an outer portion by a plurality of bendable members, a proximal end of each bendable member being attached to the inner portion and a distal end of each bendable member being attached to the outer portion, the inner and outer portions being centred on a central axis and the plurality of bendable members comprising at least one strain-sensing element, wherein the plurality of bendable members are thinner than the inner and outer portions. The strain-sensing structure may be formed from a resilient material, such as stainless steel. Such a strain-sensing structure may be incorporated in a measurement probe. Any of the above-described features of the invention may also be included.

Also described herein is a strain-sensing structure (e.g. a strain-sensing disk) for connecting a stylus holder to a probe body, the strain-sensing structure having an inner portion connected to a concentric outer portion by a plurality of curved bendable members, a proximal end of each bendable member being attached to the inner portion and a distal end of each curved bendable member being attached to the outer portion. Such a strain-sensing structure may be incorporated in a measurement probe. Any of the above-described features of the invention may also be included.

A measurement probe is thus described herein. The measurement probe may be for a coordinate positioning apparatus. The measurement probe may comprise a probe body. The measurement probe may comprise a stylus holder. A strain-sensing structure may be provided. The strain-sensing structure may connect the stylus holder to the probe body. The strain-sensing structure may have an inner portion. The strain-sensing structure may have an outer portion. The inner portion may be connected to the outer portion by a plurality of bendable members. A proximal (or first) end of each bendable member may be attached to the inner portion. A distal (or second) end of each bendable member may be attached to the outer portion. The inner and outer portions may be centred on a central axis. The plurality of bendable members may comprise at least one strain-sensing element. The proximal and distal ends of each bendable member may be located at different angles about the central axis. Any of the above-described features of the invention may also be included.

A method of acquiring scanning measurements using a measurement probe as described above is also envisaged.

The invention will now be described, by way of example only, with reference to the accompanying drawings in which;
Figure 1 shows a prior art strain gauge touch trigger probe as described in WO2006/100508,
Figure 2 shows a prior art strain-sensing disk having radially extending spokes that is used in the touch trigger probe of figure 1,
Figure 3 is a perspective view of the strain gauge and stylus holder arrangement of the present invention,
Figure 4 shows a section though a measurement probe of the present invention,
Figure 5 shows a cut-away view of the measurement probe shown in figure 4,
Figures 6a and 6b show perspective views of the upper and lower surfaces of a strain-sensing structure of the present invention,
Figures 7a and 7b show plan views of the upper and lower surfaces of a strain-sensing structure of the present invention,
Figures 8a and 8b show strain simulations of the strain-sensing structure of the present invention when that structure is undeflected and deflected respectively,
Figure 9a and 9b show the reaction forces at the strain gauge location on the strain-sensing structure, and
Figure 10 shows the measurement range obtained using the measurement probe of the present invention.

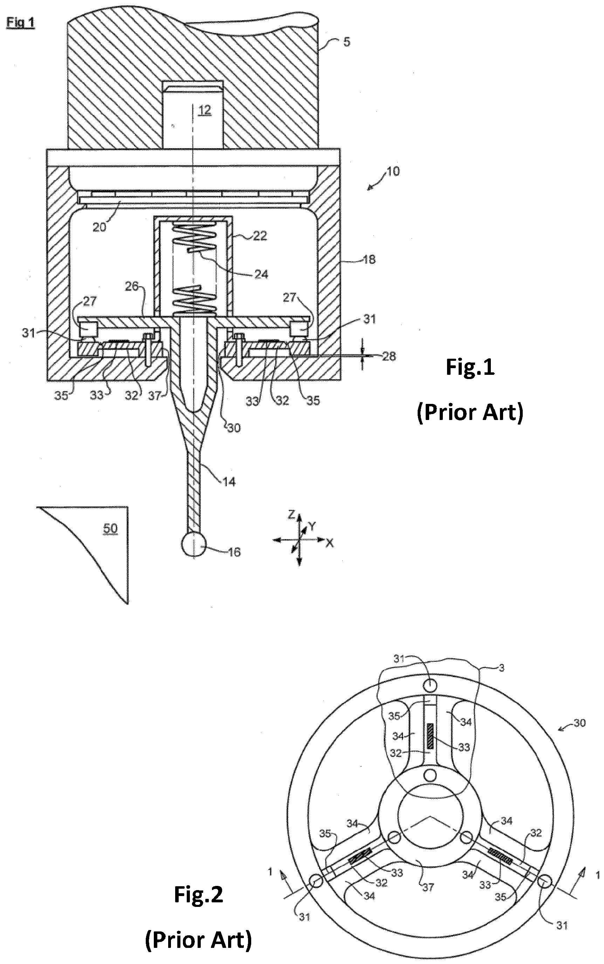

Referring to figures 1 and 2, a (prior art) touch trigger probe 10 as described with reference to figures 1 and 2 of WO2006/100508 is illustrated. For clarity the view of the probe in figure 1 is a part-section in the sectional plane shown as 1-1 in Fig 2. This plane is not completely flat but includes two planes at 120° to each other.

Figure 1 shows the touch trigger probe 10 attached to a coordinate positioning apparatus 5 via a boss 12. As explained above, the coordinate positioning apparatus may comprise a coordinate measuring machine (CMM), robot, machine tool or the like which can move the probe 10 relative to an object 50. The coordinate positioning apparatus 5 is configured to measure the position of the probe 10 in the illustrated x, y and z directions (i.e. in a Cartesian machine coordinate system).

The probe 10 has a stylus 14 having a spherical tip 16 at its distal end for contacting an object, such as the illustrated object 50. In this example, the stylus 14 also includes an integrated stylus holder but it should be note that these could be provided as separable components. The probe 10 also includes a main body 18, a circuit board 20, a spring cage 22, a compression spring 24, an upper member 26 at the proximal end of the stylus 14 and a strain-sensing structure 30. The spring cage 22 and a central portion 37 of the strain-sensing structure 30 are both secured to the main body 18 of the probe 10. The upper member 26 of the stylus 14 includes three pairs of rollers 27 that are pressed into engagement with three balls 31 on the strain-sensing structure 30 by the compression spring 24. The balls 31 and corresponding pairs of rollers 27 provide a kinematic location (i.e. using six points of contact) that ensures the upper member 26 adopts a repeatable location relative to the strain-sensing structure 30.

The strain-sensing structure 30 is shown in more detail in figure 2. An outer ring portion that includes the balls 31 is attached to a circular central portion 37 via three radially extended arms 32. A semiconductor strain gauge 33 is secured to each of the arms 32. As explained above, the circular central portion 37 is anchored to the probe body 18. Altering the force applied to the balls 31 thus changes the strain within the radially extending arms 32 which can be measured by the strain gauges 33.

In use, a force exerted on the stylus tip 16 in any of the x, y or z directions will thus alter the force applied to the strain-sensing structure 30 via the balls 31. In other words, a force applied to the stylus will cause flexing of the radially extending arms 32 of the strain-sensing structure 30 relative to the body 18. The signals from the strain gauge 33 are passed to the circuit board 20 and processed to ascertain when a force above a certain magnitude has been applied. In particular, the signals from the strain gauges sensors can be combined using the sum-of-squares technique described in WO2006/120403. A trigger signal is then output when it is determined that the stylus has made contact with an object.

It should be noted that one of the advantages of the prior art touch trigger probe mentioned above is robustness. Excessive force on the stylus in the x or y directions, or pulling the stylus in the z direction away from the probe body, will result in closing of the gap 28 between the strain-sensing structure 30 and the probe body 18 (i.e. the probe body effectively acts as a mechanical stop to limit bending of the strain-sensing structure 30). Any excessive force applied to the stylus in the z-direction towards the probe body causes compression of spring 24 disconnecting the upper stylus member 26 and the strain-sensing structure 30; i.e. this force overcomes the force applied by the compression spring 24. If such a force is removed, the balls 31 and corresponding pairs of rollers 27 ensure the stylus re-seats in the same (repeatable) position relative to the strain-sensing structure 30. These features give the probe the robustness that is required to allow operation in a machine tool environment or the like.

The above-described touch trigger measurement probe thus internally analyses the outputs of the strain gauges 33 of the strain-sensing structure 30 that provide a measure of the amount of stylus deflection. These strain sensor signals are, however, not output from the probe. The only measurement signal output from the probe is a trigger signal that is issued when the strain gauge signals exceed a certain threshold and thus indicate the stylus has contacted an object.

The prior art arrangement described above is only suitable for touch trigger measurements because although the strain-sensing structure is highly sensitive it is only able to sense stylus deflections over a very small deflection range (e.g. stylus deflections of more than around 30µm for a 100mm stylus will saturate the strain gauges). This deflection range is simply insufficient for use in a scanning system where the stylus is moved (scanned) along a surface and a stream of stylus deflection data captured for combination with associated machine data. In other words, for the majority of measurement applications the expected positional variations in the surface being measured are likely to far exceed the workable deflection range that would be provided by the prior art probe structure described above.

In accordance with the present invention, a modified strain-sensing structure has been devised that has the robustness and sensitivity benefits of the prior art touch trigger probe described above but also provides a greatly expanded working range of deflection without increasing the overall size of the measurement probe. This modified strain-sensing structure can provide, for example, a measurable deflection range of more than 1.5 mm (for a 100mm stylus) which is sufficient to enable its use as a scanning probe as well as a touch trigger probe. Moreover, the robustness advantages of the prior art touch trigger probe can be retained. The advantages of strain gauge touch trigger probes can thus be combined with the speed benefits of being able to scan a surface rather than taking a series of touch trigger measurements.

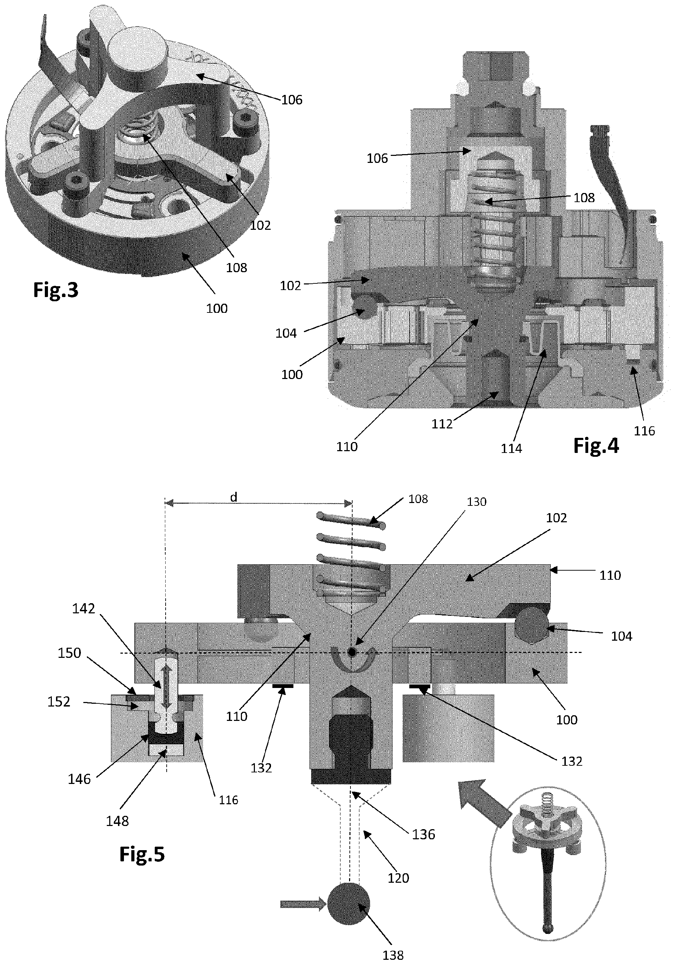

Referring to figure 3, part of the internal mechanism of a measurement probe according to the present invention is illustrated. Other features of the measurement probe not shown in figure 3 (e.g. the probe body, the attachment to the coordinate positioning apparatus etc) may be conventional or similar to those described above with reference to figures 1 and 2. In particular, there is shown in figure 3 a strain-sensing structure 100, a three-armed stylus holder plate 102 that engages three balls 104 mounted to the strain-sensing structure 100, a return-force cage 106 and a coil spring 108. In a similar manner to the prior art device described above, the coil spring 108 acts to urge the stylus holder plate 102 into engagement with the balls 104 of the strain-sensing structure 100.

The arrangement illustrated in figure 3 minimises any external forces that could potentially affect the repeatability of the mechanical rest position adopted by the stylus holder plate 102. In particular, the kinematic holding force (i.e. the spring force applied to maintain engagement of the stylus holder plate 102 with the balls 104) is reacted back into the outer stiff region of the strain-sensing structure 100. This has the benefit that the kinematic compression spring 108 remains substantially parallel to the outer region moving part of the strain-sensing structure 100 when providing the necessary holding force. The mechanism also has inbuilt protection to avoid over stressing the structure during over-travel and crash events. This includes having mechanical offload features on both sides of the strain-sensing structure for XY and Z over-travel and crash occurrences.

Figure 4 is a sectional view through a measurement probe that include the internal mechanism shown in figure 3. The stylus holder 110 that includes the three-armed stylus holder plate 102 is shown pressed into engagement with the strain-sensing structure 100 via the balls 104. The stylus holder also comprises a threaded recess 112 for received the proximal end of a stylus shaft. Also shown is a diaphragm seal 114 that prevents external contaminants entering the probe mechanism. The diaphragm is configured to have a low geometric stiffness to minimise its effect on the ability of the stylus holder to return to a repeatable rest position. For example, the diaphragm 114 is located as close as possible to the structure centre of rotation to minimise any moment effects and an O-Ring is fitted axially against the diaphragm to prevent any slippage of the diaphragm.

Figure 5 is a cutaway, sectional view of certain components of the measurement probe illustrated in figures 3 and 4 and the inset to figure 5 shows a perspective (illustrative) view of such components. The stylus holder 110 is shown with a stylus 120 attached. The balls 104 mounted to the strain-sensing structure 100 are shown engaged with the stylus holder plate 102. Also illustrated are the fixings 132 that attach the strain-sensing structure 100 to the probe body or casing (not shown in figure 5). It can also be seen from figure 5 how the stylus holder pivots about the pivot point 130, which is in the plane of the disk-shaped strain-sensing structure 100. Furthermore, the separation "d" between the damper 116 and the longitudinal axis 136 of the stylus holder 110 provides a mechanical advantage that amplifies the force applied to the strain-sensing structure 100 when the stylus tip 138 is displaced (e.g. by contact with an object).

The dampers 116 include a shaft 142 attached to the strain-sensing structure 100 and a cavity containing a ferrofluid 146 and a magnet 148. A retainer 150 is also shown along with a ferrofluid void 152 for retaining ferrofluid if the probe is rotated at high speed. The dampers 116 are arranged to damp motion of the strain-sensing structure 100 such that vibrations that would otherwise occur are reduced. In particular, the damping reduces the magnitude of vibration during probe moves, scanning events and approaching or departing surfaces. This has the benefit of providing a rapid decay in output settling time after departing a surface, a repeatable stylus return or null position and damping fluid retention even during high speed spin events.

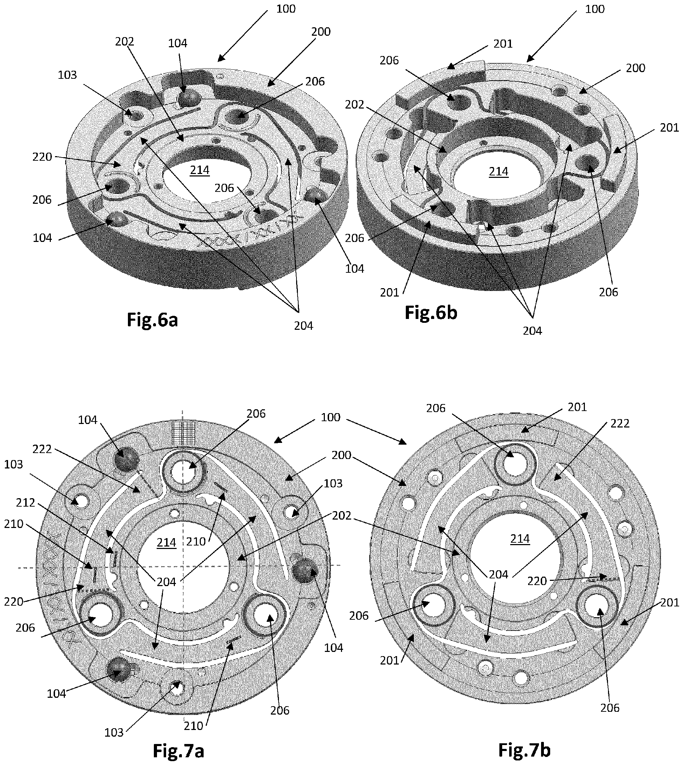

Referring to figures 6a, 6b, 7a and 7b, the strain-sensing structure 100 will be described in more detail. Figures 6a and 7a illustrate a first or upper surface of the strain-sensing structure 100 in perspective and plan views respectively. Figures 6b and 7b illustrate a second or lower surface of the strain-sensing structure 100 in perspective and plan views respectively.

The strain-sensing structure 100 is a circular disk and has an outer (ring) portion 200 that is connected to an inner (hub) portion 202 by three bendable members or arms 204. The structure comprises Martensitic stainless steel and is formed by an EDM (electrical discharge machine) process, in particular a wire-EDM process. The use of other materials and manufacturing techniques (e.g. stamping, machining etc) would also be possible, as described above. The inner and outer portions comprise thick (and hence stiff) regions, whilst the bendable arms 204 are machined to be significantly thinner.

As explained above, the inner (hub) portion 202 of the strain-sensing structure 100 is rigidly attached to the probe housing via the three attachment holes 206. The inner portion 202 is thus immobilised relative to the probe housing. The outer portion 200 is also in the form of a rigid ring, which is sufficiently stiff not to deform when a force is applied to the balls 104 by the moveable stylus holder. The outer portion 200 thus moves with the stylus holder. The underside of the outer portion 200 comprises three equi-spaced balancing stiffeners 201. The geometry in the region of the stiffeners 201 is also optimised to generate near equal and opposite deformation of the centre when the stylus holder force is applied via the balls 104. The outer portion also include apertures 103 to which the above-described return-force cage 106 (which engages the coil spring 108) is attached. The inner portion 202 is concentric with the outer portion 200. The inner portion 202 also includes a centrally located aperture 214 through which the stylus holder can pass thereby allowing the central axes of the inner and outer portions to coincide with the long axis 136 of the stylus holder and stylus.

The bendable arms 204 are spiral shaped, low stiffness members that connect the fixed inner portion 202 of the structure to the stiff outer portion 200. In particular, the proximal end 220 of each arm is attached to the inner portion 202 adjacent to an attachment hole 206. The distal end 222 of each arm is attached to the outer portion 200 adjacent to the location of a balls 104. Attaching the distal end 222 of each arm to the part of the outer portion 200 adjacent the balls 104 minimises the influence of any deformation of the outer portion 200 between the kinematic balls. The geometry at the proximal and distal ends of each bendable arm is also optimised to generate a passive strain response from the applied kinematic force and to minimise stress concentrations at the interface with the stiffer inner/outer portions.

Unlike the arrangements described in WO2006/100508 and WO2006/120403, it can be seen that the bendable arms 204 do not extend linearly outwards (i.e. in a purely radial direction) but instead extend in an approximately circumferential direction. In other words, the proximal end 220 of each arm (i.e. the end attached to the inner portion 202) is located at a different angle around the central axis of the strain-sensing structure 100 than the distal end 222 of each arm (i.e. the end attached to the outer portion 200). This allows the bendable arms 204 to be longer than if they extended only in a radial direction thereby increase the amount of bending that can occur for a given diameter of strain-sensing structure 100. In other words, the spiral arm profile is optimised to maximise arm length in a compact solution.

The bendable arms 204 are also thinner than the inner/outer portions and are curved in the plane of the strain-sensing structure 100. In particular, the radially innermost and outermost edges of the arms 204 are curved about different centre points that are also spaced apart from the centre of the structure. This minimises space allowing a compact solution with a stiffer outer region within the same space. The arm profile also minimises twisting of the beam during use and encourages more bending at the fixed proximal end 220 adjacent to where a strain gauge 210 is located.

A force applied to the outer portion 200 by the stylus holder (via the balls 104) will cause bending of the bendable arms 204. A strain gauge 210 (i.e. an example of a strain-sensing element) is attached to each bendable arm 204. The outputs from the three strain gauges are processed (e.g. by a processor mounted inside the measurement probe) to measure the stylus deflection. The use of the three strain gauge outputs allows the magnitude and direction of stylus deflection to be sensed in three-dimensions (i.e. in a x-y plane parallel to plane of the disk and along the z-direction perpendicular to the disk). If touch-trigger measurements are required, these signals can be combined using a sum-of-squares technique of the type described in WO2006/120403. A fourth strain gauge 212 is also attached to the inner portion 202; this is used to allow the effects of temperature on the strain that is measured by the strain gauges 210 to be mitigated.

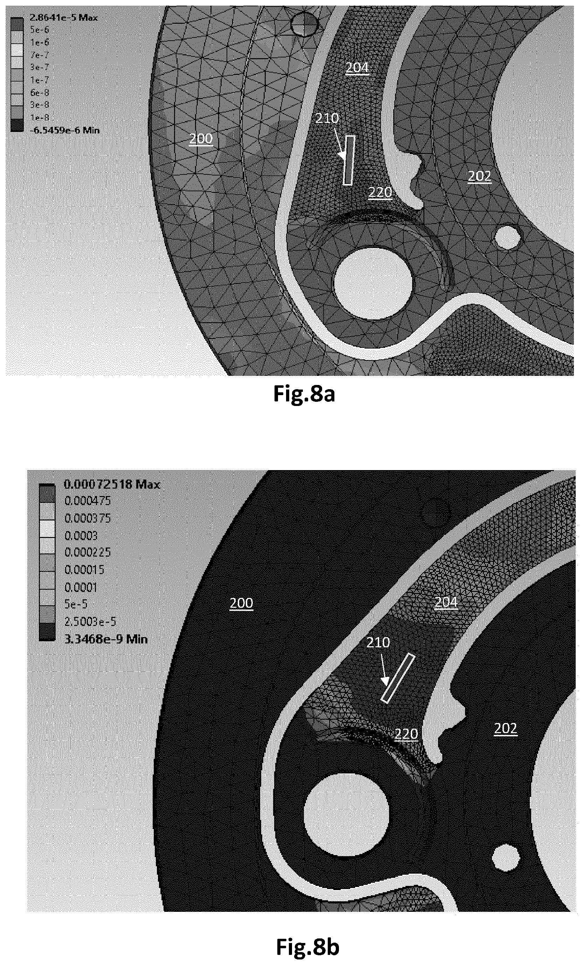

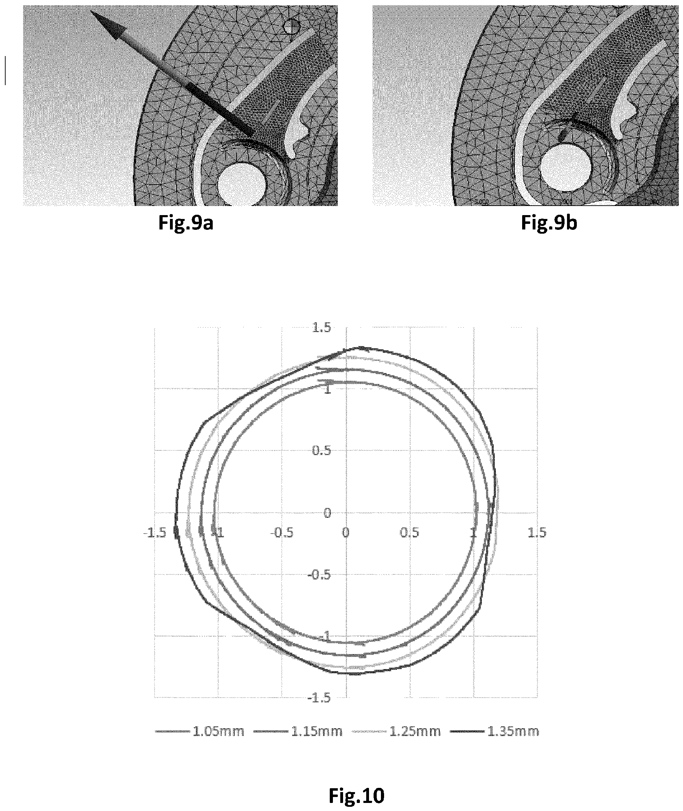

Referring to figures 8a, 8b, 9a and 9b the modelled strain within parts of the strain-sensing structure 100 is shown. This analysis allows the location of the strain gauges 210 on the bendable arms 204 to be optimised.

Figure 8a shows a strain map for the part of the strain-sensing structure 100 adjacent the proximal end 220 of a bendable arm 204 when no deflection force is being applied to the stylus of the device (i.e. this shows the residual strain in the strain-sensing structure in the absence of any applied external force). It can be seen that the high stiffness of the outer portion 200 minimises deformation and strain levels. The fixed inner portion 202 also has very low strain. As explained above, the strain gauges 210 are located at the proximal end of the bendable arm. The precise location of each strain gauge 210 is selected to coincide with a passive strain region; i.e. a location where there is a low magnitude of strain induced by the applied kinematic (spring) force. In other words, the residual or parasitic strain at the strain gauge location is minimised so that strain induced by arm bending when a force is applied to the stylus can be measured.

Figure 8b shows a strain map for the part of the strain-sensing structure 100 adjacent the proximal end 220 of a bendable arm 204 when a deflection force is applied that induces a strain that is near the upper strain limit. It should be noted that the scale and dimensions of the image of figure 8b are different to those of figure 8a. Figure 8b shows how the strain caused by the stylus deflection is concentrated near the proximal end 220 of a bendable arm 204 in the vicinity of the strain gauge 210. This high concentration of strain allows the strain gauge 210 to be highly responsive to changes in strain that occur as the amount of stylus deflection varies.

It should be noted that a certain level of stress is required and therefore strain to achieve the desired sensitivity per unit deflection. A balance is thus struck between achieving enough sensitivity, providing suitable range and achieving an appropriate level of robustness. This balance can be mitigated to a certain extent by reacting the kinematic force as described above combined with the selection of hardened and tempered 440C Martensitic stainless steel that provide a high fatigue endurance limit.

Figures 9a and 9b respectively show that the reaction from the applied kinematic force within the structure is normal to the bendable arm 204 and that the reaction moment is in-line with the gauge location. This minimises undesirable twisting of the bending arm 204.

The strain gauge locations have thus been selected to be in a region that has a passive response to applied kinematic force and that is susceptible to minimal change in sensitivity due to positional placement errors. It should be noted that in addition to an adhesive bonding layer, a Diamond Like Carbon (DLC) coating is applied to the stainless steel strain sensing structure to provide electrical isolation. This enables a very thin single layer of adhesive to be used to bond the strain gauge to the structure thereby maximising strain transfer and promoting consistency between gauges. Testing the strain-sensing structure with twelve million Z over-travel moves demonstrated there was no loss of performance or delamination of the coating.

The strain gauges are subjected to a compressive strain during fitment due to the adhesive cure temperature and the difference in thermal expansion of the gauge and structure materials. During operation the gauges are subjected to a strain of plus or minus several hundred µε about the fitted compressive strain. A benefit of the present kinematic load arrangement is that the gauges remain in compression, avoiding a potential nonlinear region in the transition between compression and tension. A further benefit to the kinematic arrangement is that the strain-sensing structure is essentially unloaded in the rest position. As gravity effects on the structure and stylus mass are minimal, the mean stress at the rest position is close to zero. This arrangement approaches the ideal "Simple Rotating Bending" analogy used in S-N curve fatigue analysis. This approach has a significant benefit of increasing the fatigue life and therefore the robustness of the structure during scanning events.

Figure 10 shows raw experimental results collected using a series of measurement probe designs as described above. The figure shows scans of increasing deflection using a ring gauge. The lower (sub-1mm) deflection scans (not shown) exhibit a constant deflection with no lobing present. The 1.25mm deflection scan has a single lobed feature in the positive horizontal axis, but the remainder of the scan is circular. The 1.35mm scan clearly shows three lobed regions. Scanning with deflections of up to around 1.25mm is thus possible. It should be noted that the scans shown in figure 10 are electronically limited. It is, however, predicted that a usable deflection range of up to 1.8mm (for a 100mm stylus) could be provided by the illustrated strain-sensing structure. This is well in excess of the 1mm deflection range that is typically required for scanning measurements.

The measurement probe arrangement described herein has thus been shown to allow a transduced range of approximately 1.25mm to be obtained. This is sufficiently large to allow scanning measurement to be acquired using the measurement probe. The measurement probe may thus be operated as a scanning probe. For example, an output module may be provided that takes the raw strain gauge signals and outputs them to an external interface or computer (e.g. as a series of stylus deflection measurements). This data transmission may be via a wired or wireless (e.g. optical or RF) link. Some processing of the signal may be performed within the measurement probe (e.g. using a processor with the probe) and/or within an associated probe interface (e.g. comprising a processor). The measurement probe may also be operated as a touch trigger probe. For example, the strain gauge outputs may be combined (e.g. using a technique as described in WO2006/120403) and compared to a trigger threshold. The output module may then output a trigger signal when the trigger threshold is crossed. The measurement probe may be switchable between a touch trigger and scanning mode, or it may simultaneously output both scanning data and touch trigger signals.

It is also important to remember that the above description relates to just one example of the present invention. The skilled person would appreciate the many alternative variants that would be possible.

## Claims

1. A measurement probe for a coordinate positioning apparatus, comprising;
a probe body,
a stylus holder, and
a strain-sensing structure connecting the stylus holder to the probe body,
the strain-sensing structure having an inner portion connected to an outer portion by a plurality of bendable members, a proximal end of each bendable member being attached to the inner portion and a distal end of each bendable member being attached to the outer portion, the inner and outer portions being centred on a central axis and the plurality of bendable members comprising at least one strain-sensing element,
**characterised in that** the proximal and distal ends of each bendable member are located at different angles about the central axis.

2. A measurement probe according to claim 1, wherein the strain-sensing structure is substantially disk-shaped.

3. A measurement probe according to claim 2, wherein the inner portion comprises a circular central hub, the outer portion comprises an outer ring and the plurality of bendable members are curved.

4. A measurement probe according to any preceding claim, wherein the plurality of bendable members comprises three bendable members that are equidistantly spaced apart from one another.

5. A measurement probe according to any preceding claim, wherein the strain-sensing structure comprises a unitary machined part.

6. A measurement probe according to any preceding claim, wherein the thickness of the plurality of bendable members is less than the inner and outer portions.

7. A measurement probe according to any preceding claim, wherein the strain-sensing structure is substantially planar and the plurality of bendable members are bendable in a direction perpendicular to the plane of the strain-sensing structure.

8. A measurement probe according to any preceding claim, wherein the width of each bendable member varies along its length.

9. A measurement probe according to any preceding claim, wherein at least one strain-sensing element is located on each bendable member.

10. A measurement probe according to any preceding claim, wherein the stylus holder holds a stylus such that the stylus axis lies on the central axis.

11. A measurement probe according to any preceding claim, wherein the inner portion is secured to probe housing and the stylus holder is connected to the outer portion.

12. A measurement probe according to any preceding claim, wherein the stylus holder is connected to the strain-sensing structure by a protection mechanism, the protection mechanism comprising a spring to bias the stylus holder into contact with the strain sensing structure in the absence of an applied force but allowing the stylus holder to disengage the strain-sensing structure when the external force applied to the stylus holder exceeds a threshold level.

13. A measurement probe according to any preceding claim, comprising at least one fluid damper for damping oscillations of the strain sensing structure.

14. A measurement probe according to any preceding claim, comprising a scanning unit configured to receive signals from the at least one strain-sensing element and to generate scanning data for output to a remote probe interface.

15. A measurement probe according to any preceding claim, comprising a touch trigger unit configured to receive signals from the at least one strain-sensing element, compare the received signals to a stylus deflection threshold and generate a trigger signal for output to a remote probe interface when the stylus deflection threshold is crossed.
